# EUROPEAN PATENT APPLICATION

(11) **EP 3 490 136 A1**
(43) Date of publication of application: **29.05.2019**
(21) Application number: 18207687.7
(22) Date of filing: 22.11.2018
(51) Int. Cl.: H02P 6/15, H02P 6/16, H02K 1/27, H02K 11/22, H02K 11/33, H02K 21/12, H02K 29/10

(54) **AN APPARATUS WHICH ROTATES A SHAFT IN WHICH ONE ELECTROMAGNET IS USED**

(30) Priority: 27.11.2017 KR 20180159196; 16.03.2018 KR 20180031143; 29.03.2018 WO PCT/KR2018/003704
(71) Applicant: Goo, Jei Hyun, Seoul 05606 (KR)
(72) Inventor: Goo, Jei Hyun, Seoul 05606 (KR)
(74) Representative: Jeck, Anton

(57) **Abstract**

An apparatus which rotates a shaft by using one electromagnet is disclosed. Permanent magnets (101, 102, 103, 104, 105, 106) are placed around a shaft in order to rotate with the shaft and one electromagnet (201) is placed outside the circumference of the permanent magnets and one device (401) of activating electromagnet is placed. Two secondary cell batteries (501, 502) are used to activate the electromagnet and the electromagnet makes the permanent magnets rotate. The secondary cell batteries are charged by using back-emf which occurs to the electromagnet. Coils (601, 602, 603, 604, 605, 606) are placed around the circumference of the permanent magnets and so the rotating permanent magnets generate electricity to the coils.

## Description

### Technical Field

The present invention relates to an apparatus which rotates a shaft by using one electromagnet. More specifically, permanent magnets are placed around a shaft in which the permanent magnets can rotate with the shaft and one electromagnet is placed outside the circumference of the permanent magnets and one device of activating electromagnet is placed. Two secondary cell batteries are used to activate the electromagnet and the electromagnet makes the permanent magnets rotate. The secondary cell batteries are charged by using back-emf which occurs to the electromagnet. Coils are placed around the circumference of the permanent magnets and so the rotating permanent magnets generate electricity to the coils.

### Background Art

In an electronic circuit using a relay, a transistor which is used as a switch is connected to a terminal of the relay and the transistor is connected to the negative side of a battery. As the battery is connected to the relay and disconnected, a voltage higher than the battery voltage occurs momentarily to the relay. This occurred voltage damages the transistor. In order to solve this problem, a diode is used in which the anode of the diode is connected to the relay of which one terminal is connected to the negative side of the battery and the cathode of the diode is connected to the relay of which other terminal is connected to the positive side of the battery. By doing this, the electricity that occurs to the relay flows from the anode of the diode to the cathode of it. In other words, a high voltage occurs momentarily to the relay of which the terminal is disconnected from the negative side of the battery and so electrons at the relay of which the terminal is connected to the positive side of the battery flow from the cathode of the diode to the anode of it and flow to the relay. The occurred high voltage to the relay is back-emf that occurs to the relay as the battery is connected to the relay and disconnected.

As a battery is connected to an electromagnet, electrons flow from the negative terminal of the battery to the positive terminal of the battery. As the electromagnet is disconnected from the negative terminal of the battery, electrons do not flow anymore from the negative terminal of the battery to the electromagnet and electrons continue to flow to the positive terminal of the battery and electrons in the electromagnet continue to move forward by the magnetic force of the electromagnet. Within the electromagnet, electrons start to disappear from the terminal which is disconnected from the negative terminal of the battery. Therefore, the number of electrons in the side which is connected to the positive terminal of the battery and the number of electrons in the side which is disconnected from the negative terminal of the battery are different and the difference changes. The difference in the number of electrons of two sides becomes bigger and then becomes smaller. The difference in the number of electrons which occurs in the electromagnet is back-emf. The back-emf becomes bigger and reaches its peak as the difference in the number of electrons of two sides is largest (that is, as electrons exist only in one half of the electromagnet). And then it becomes smaller and disappears.

The voltage of one electromagnet becomes higher than the voltage of one secondary cell battery (secondary cell battery-1) instantly by back-emf which occurs to the electromagnet as the secondary cell battery-1 is disconnected from the electromagnet. If both the positive terminal and the negative terminal of the secondary cell battery-1 are disconnected from both terminals of the electromagnet, the electromagnet becomes a power source instantly and the terminal (terminal B) which is disconnected from the negative terminal of the secondary cell battery-1 becomes the positive terminal and the terminal (terminal A) which is disconnected from the positive terminal of the secondary cell battery-1 becomes the negative terminal. If electrons can flow from the positive terminal of other secondary cell battery (secondary cell battery-2) to the terminal B of the electromagnet but cannot flow reversely and electrons can flow from the terminal A of the electromagnet to the negative terminal of the secondary cell battery-2 but cannot flow reversely, then electrons flow from the positive terminal of the secondary cell battery-2 to the negative terminal of the secondary cell battery-2 and the secondary cell battery-2 is charged.

Then after a while, if the positive terminal of the secondary cell battery-1 is connected to the terminal A of the electromagnet, electrons flow from the electromagnet to the positive terminal of the secondary cell battery-1. And electrons flow from the positive terminal of the secondary cell battery-2 to the terminal B of the electromagnet by the back-emf which occurs to the electromagnet.

By doing this, the electromagnet activates and the power consumption of the secondary cell battery-1 is reduced and the secondary cell battery-2 is charged by the back-emf which occurs to the electromagnet

The prior art is WIPO WO 2015/142084 A1 (24. 09. 2015) (KR 10-1733373 B1 (08.05.2017)). In this invention, the negative terminal of a secondary cell battery is disconnected from an electromagnet. Electrons which flowed to the electromagnet continue to flow to the positive terminal of the secondary cell battery as the electromagnet is disconnected from the negative terminal of the secondary cell battery. By back-emf which occurs to the electromagnet, electrons in a capacitor flow to the electromagnet and also electrons flow from the positive terminal of the secondary cell battery to the capacitor and the electromagnet. The electrons which flowed to the electromagnet continue to flow to the positive terminal of the secondary cell battery.

### Technical Problem

The purpose of the present invention is to rotate a shaft with permanent magnets by using one electromagnet and to reduce the power consumption of secondary cell batteries by using back-emf which occurs to the electromagnet. Also, it is to generate electricity to coils by using the rotating permanent magnets.

### Technical Solution

In order to achieve the above purpose, the present invention comprises permanent magnets, one electromagnet, two secondary cell batteries, and one device of activating electromagnet.

Permanent magnets are placed around a shaft wherein permanent magnets can rotate with the shaft and one pole of each permanent magnet faces the shaft and other pole of each permanent magnet faces outside and N and S poles are alternated.

One electromagnet is placed outside the circumference of the permanent magnets.

Two secondary cell batteries are placed to supply DC electric current.

One rotating component P which is equipped on the shaft and is used to pass and block or to reflect and pass the light of one photointerrupter (photointerrupter-1) repeatedly in order to connect the positive terminal of one secondary cell battery (secondary cell battery-1) to one terminal (terminal A) of the electromagnet and to disconnect them repeatedly,
one rotating component N which is equipped on the shaft and is used to pass and block or to reflect and pass the light of other photointerrupter (photointerrupter-2) repeatedly in order to connect the negative terminal of the secondary cell battery-1 to other terminal (terminal B) of the electromagnet and to disconnect them repeatedly, the rotating component P is set to pass and block or to reflect and pass the light of other photointerrupter (photointerrupter-3) repeatedly in order to connect the positive terminal of other secondary cell battery (secondary cell battery-2) to the terminal B of the electromagnet and to disconnect them repeatedly,
the rotating component N is set to pass and block or to reflect and pass the light of other photointerrupter (photointerrupter-4) repeatedly in order to connect the negative terminal of the secondary cell battery-2 to the terminal A of the electromagnet and to disconnect them repeatedly, wherein the photointerrupters are transmissive type or reflective type.

One device of activating electromagnet which activates the electromagnet is placed wherein the positive terminal of the secondary cell battery-1 and the terminal A of the electromagnet are connected by one P channel FET (switch P1), the terminal B of the electromagnet and the negative terminal of the secondary cell battery-1 are connected by one N channel FET (switch N1), the positive terminal of the secondary cell battery-2 and the terminal B of the electromagnet are connected by other P channel FET (switch P2), the terminal A of the electromagnet and the negative terminal of the secondary cell battery-2 are connected by other N channel FET (switch N2),
the cathode of one diode (diode-1) is connected to the positive terminal of the secondary cell battery-1 and the anode of the diode-1 is connected to the terminal A of the electromagnet,
the cathode of other diode (diode-2) is connected to the terminal B of the electromagnet and the anode of the diode-2 is connected to the negative terminal of the secondary cell battery-1,
the cathode of other diode (diode-3) is connected to the positive terminal of the secondary cell battery-2 and the anode of the diode-3 is connected to the terminal B of the electromagnet
the cathode of other diode (diode-4) is connected to the terminal A of the electromagnet and the anode of the diode-4 is connected to the negative terminal of the secondary cell battery-2,
the switch P1 becomes ON as the light of the photointerrupter-1 is passed by the rotating component P and the switch P1 becomes OFF as the light of the photointerrupter-1 is blocked by the rotating component P,
the switch N1 becomes ON as the light of the photointerrupter-2 is passed by the rotating component N and the switch N1 becomes OFF as the light of the photointerrupter-2 is blocked by the rotating component N,
the switch P2 becomes ON as the light of the photointerrupter-3 is passed by the rotating component P and the switch P2 becomes OFF as the light of the photointerrupter-3 is blocked by the rotating component P,
the switch N2 becomes ON as the light of the photointerrupter-4 is passed by the rotating component N and the switch N2 becomes OFF as the light of the photointerrupter-4 is blocked by the rotating component N, wherein the photointerrupters are transmissive type,
the switch P1 and the switch N1 are set to ON to start the electromagnet activating at the position where the electromagnet repels one facing permanent magnet of the permanent magnets effectively,
routine A:
① both the switch P1 & the switch N1 become ON and so the electromagnet is activated by the secondary cell battery-1,
② then after a while both the switch P1 & the switch N1 become OFF,
③ then after a while the switch P1 becomes ON,
wherein electrons flow from the positive terminal of the secondary cell battery-2 to the terminal B of the electromagnet and also flow from the terminal A of the electromagnet to the negative terminal of the secondary cell battery-2 by back-emf which occurs to the electromagnet,
and the above routine A is repeated while the electromagnet repels a facing permanent magnet of the permanent magnets and attracts a following permanent magnet of the permanent magnets,
the switch P2 and the switch N2 are set to ON to start the electromagnet activating at the position where the electromagnet repels one facing permanent magnet of the permanent magnets effectively,
routine B:
① both the switch P2 & the switch N2 become ON and so the electromagnet is activated by the secondary cell battery-2,
② then after a while both the switch P2 & the switch N2 become OFF,
③ then after a while the switch P2 becomes ON,
wherein electrons flow from the positive terminal of the secondary cell battery-1 to the terminal A of the electromagnet and also flow from the terminal B of the electromagnet to the negative terminal of the secondary cell battery-1 by back-emf which occurs to the electromagnet,
and the above routine B is repeated while the electromagnet repels a facing permanent magnet of the permanent magnets and attracts a following permanent magnet of the permanent magnets.

### Advantageous Effects

In the present invention one electromagnet is used to rotate a shaft with permanent magnets and the power consumption of secondary cell batteries can be reduced by using back-emf which occurs to the electromagnet. Also, the rotating permanent magnets can generate electricity to coils. The present invention can be used in various areas such as electric cars, electric airplanes, electric boats, electric bicycles, drones, etc.

### Brief Description of Drawings

FIG. 1 is a perspective view that illustrates a configuration of an apparatus according to an embodiment of the present invention.
FIG. 2 is a drawing that illustrates a rotating component P to be used for passing and blocking the light of one photointerrupter repeatedly in order to connect the positive terminal of a secondary cell battery to one terminal of one electromagnet and to disconnect them repeatedly in one device of activating electromagnet.
FIG. 3 is a drawing that illustrates a rotating component N to be used for passing and blocking the light of other photointerrupter repeatedly in order to connect the negative terminal of one secondary cell battery to other terminal of the electromagnet and to disconnect them repeatedly in one device of activating electromagnet.
FIG. 4 is an electronic circuit of one device of activating electromagnet.
FIG. 5 is a perspective view that illustrates a configuration of an apparatus according to other embodiment of the present invention and coils are placed inside the circumference of permanent magnets in the apparatus of FIG. 1.

### Best Mode for Carrying out the Invention

A desirable embodiment of the present invention is described by way of example with reference to the accompanying drawings.

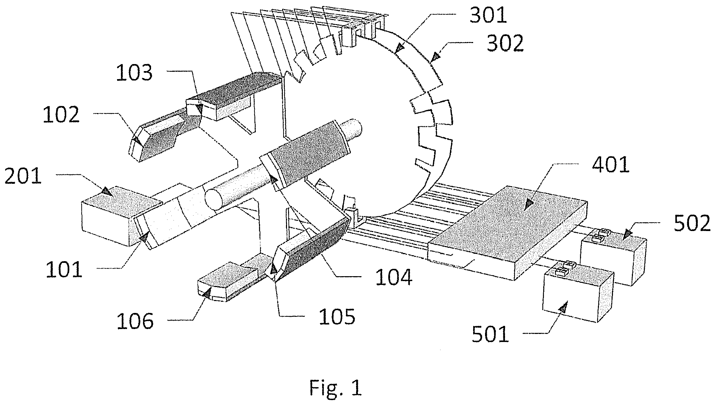

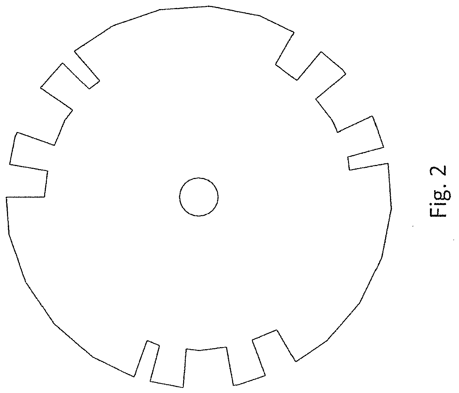

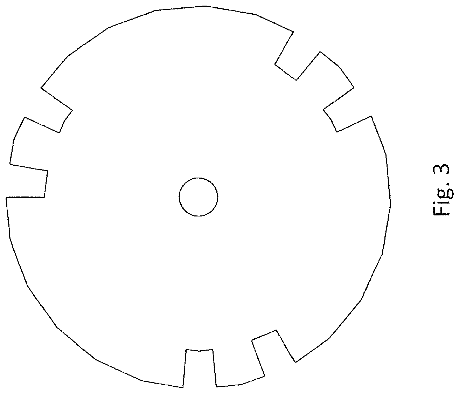

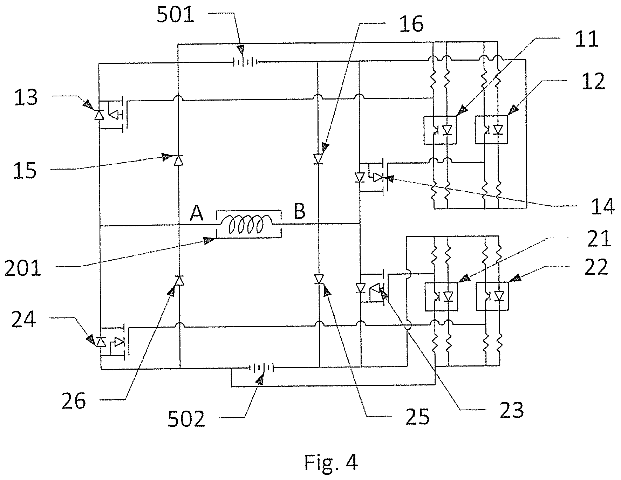

FIG. 1 is a perspective view that illustrates a configuration of an apparatus according to an embodiment of the present invention. FIG. 2 is a drawing that illustrates a rotating component P to be used for passing and blocking the light of one photointerrupter repeatedly in order to connect the positive terminal of a secondary cell battery to one terminal of one electromagnet and to disconnect them repeatedly in one device of activating electromagnet. FIG. 3 is a drawing that illustrates a rotating component N to be used for passing and blocking the light of other photointerrupter repeatedly in order to connect the negative terminal of one secondary cell battery to other terminal of the electromagnet and to disconnect them repeatedly in one device of activating electromagnet. FIG. 4 is an electronic circuit of one device of activating electromagnet.

As shown in FIG. 1, six permanent magnets (101, 102, 103, 104, 105, 106) are placed to be able to rotate with a shaft and the shaft is placed to be able to rotate with the unillustrated bearings. One electromagnet (201) is placed outside the circumference of six permanent magnets (101, 102, 103, 104, 105, 106) and the electromagnet is fixed with the unillustrated fixing means. One rotating component P (301) and one rotating component N (302) are placed on the shaft and one device (401) of activating electromagnet that implements photointerrupters and other electronic components is used to activate the electromagnet. Two secondary cell batteries (501, 502) are used to supply DC electric current to the electromagnet.

Permanent magnet-1,2,3,4,5,6 (101, 102, 103, 104, 105, 106) are placed with 60° of angular separation in which S poles of permanent magnet-1,3,5 (101, 103, 105) face the shaft and N poles of them face outside and N poles of permanent magnet-2,4,6 (102, 104, 106) face the shaft and S poles of them face outside.

One rotating component P (301) is placed on the shaft and the rotating component P (301) passes the light for 10° of angular separation and block the light for 10° of angular separation and pass the light for 5° of angular separation and this process is repeated 2 times and then block the light for 70° of angular separation. This process of 120° of angular separation is continuously repeated while the rotating component P rotates. If electricity flows to an electromagnet and is disconnected as a permanent magnet reaches the electromagnet, the magnetic force of the electromagnet attracts the permanent magnet and so prohibits rotating the permanent magnet. Thus, the process of passing light is not performed anymore as the permanent magnet approaches the electromagnet.

One rotating component N (302) is placed on the shaft and the rotating component N (302) passes the light for 10° of angular separation and block the light for 15° of angular separation and this process is repeated 2 times and then block the light for 70° of angular separation. This process of 120° of angular separation is continuously repeated while the rotating component N rotates.

The rotating component P (301) is used to connect the positive terminal of secondary cell battery-1 (501) to one terminal (terminal A) of the electromagnet (201) and disconnect them. The rotating component N (302) is used to connect the negative terminal of secondary cell battery-1 (501) to other terminal (terminal B) of the electromagnet (201) and disconnect them.

The rotating component P (301) is used to connect the positive terminal of secondary cell battery-2 (502) to terminal B of the electromagnet (201) and disconnect them. The rotating component N (302) is used to connect the negative terminal of secondary cell battery-2 (502) to terminal A of the electromagnet (201) and disconnect them.

The rotating component P (301) and the rotating component N (302) are set to pass the light of photointerrupter-1 (11) & photointerrupter-2 (12) and then block the light of photointerrupter-1 (11) & photointerrupter-2 (12) and then pass the light of photointerrupter-1 (11) as the electromagnet (201) faces permanent magnet-1,3,5 (101,103,105) at the position where the electromagnet (201) repels permanent magnet-1,3,5 (101,103,105) effectively.

The rotating component P (301) and the rotating component N (302) are set to pass the light of photointerrupter-3 (21) & photointerrupter-4 (22) and then block the light of photointerrupter-3 (21) & photointerrupter-4 (22) and then pass the light of photointerrupter-3 (21) as the electromagnet (201) faces permanent magnet-2,4,6 (102,104,106) at the position where the electromagnet (201) repels permanent magnet-2,4,6 (102,104,106) effectively.

One device (401) of activating electromagnet makes the electromagnet (201) activate by changing the polarity of the electromagnet (201) alternately. As shown in FIG. 4, if the light of photointerrupter-1 (11) & photointerrupter-2 (12) is passed through, P channel FET-1 (13) and N channel FET-1 (14) become ON and electrons flow from the negative terminal of secondary cell battery-1 (501) to the positive terminal of secondary cell battery-1 (501) and the electromagnet (201) activates. Then after a while if the light of photointerrupter-1 (11) & photointerrupter-2 (12) is blocked, then P channel FET-1 (13) and N channel FET-1 (14) become OFF and electrons do not flow from the negative terminal of secondary cell battery-1 (501) to the positive terminal of secondary cell battery-1 (501). At this time, back-emf occurs to the electromagnet (201) and electrons flow from the positive terminal of secondary cell battery-2 (502) to the negative terminal of secondary cell battery-2 (502). Then after a while if the light of photointerrupter-1 (11) is passed, then P channel FET-1 (13) becomes ON and electrons which are held in the electromagnet (201) flow to the positive terminal of secondary cell battery-1 (501). And by back-emf which occurs to the electromagnet (201) electrons flow from the positive terminal of secondary cell battery-2 (502) to the negative terminal of secondary cell battery-2 (502). The above routine is repeated 2 times while the electromagnet (201) repels a facing permanent magnet and attracts a following permanent magnet. If the light of photointerrupter-3 (21) & photointerrupter-4 (22) is passed through, P channel FET-2 (23) and N channel FET-2 (24) become ON and electrons flow from the negative terminal of secondary cell battery-2 (502) to the positive terminal of secondary cell battery-2 (502) and the electromagnet (201) activates. Then after a while if the light of photointerrupter-3 (21) & photointerrupter-4 (22) is blocked, then P channel FET-2 (23) and N channel FET-2 (24) become OFF and electrons do not flow from the negative terminal of secondary cell battery-2 (502) to the positive terminal of secondary cell battery-2 (502). At this time, back-emf occurs to the electromagnet (201) and electrons flow from the positive terminal of secondary cell battery-1 (501) to the negative terminal of secondary cell battery-1 (501). Then after a while if the light of photointerrupter-3 (21) is passed, then P channel FET-2 (23) becomes ON and electrons which are held in the electromagnet (201) flow to the positive terminal of secondary cell battery-2 (502). And by back-emf which occurs to the electromagnet (201) electrons flow from the positive terminal of secondary cell battery-1 (501) to the negative terminal of secondary cell battery-1 (501). The above routine is repeated 2 times while the electromagnet (201) repels a facing permanent magnet and attracts a following permanent magnet.

As permanent magnet-1 (101) reaches the position where the electromagnet (201) repels permanent magnet-1 (101) effectively as shown in FIG. 1, secondary cell battery-1 (501) is discharged and the electromagnet (201) activates. By back-emf which occurs to the electromagnet (201) the electromagnet (201) activates and secondary cell battery-2 (502) is charged. While the electromagnet (201) is activating, the electromagnet (201) repels permanent magnet-1 (101) and attracts permanent magnet-2 (102) and so the shaft rotates and permanent magnet-2 (102) reaches the electromagnet (201).

As permanent magnet-2 (102) reaches the position where the electromagnet (201) repels permanent magnet-2 (102) effectively, secondary cell battery-2 (502) is discharged and the electromagnet (201) activates. By back-emf which occurs to the electromagnet (201) the electromagnet (201) activates and secondary cell battery-1 (501) is charged. While the electromagnet (201) is activating, the electromagnet (201) repels permanent magnet-2 (102) and attracts permanent magnet-3 (103) and so the shaft rotates and permanent magnet-3 (103) reaches the electromagnet (201).

Like this, by using two batteries (501, 502) and changing the polarity of the electromagnet (201) alternately, the electromagnet (201) repels a facing permanent magnet and attracts a following permanent magnet and so permanent magnets (101, 102, 103, 104, 105, 106) rotate continuously.

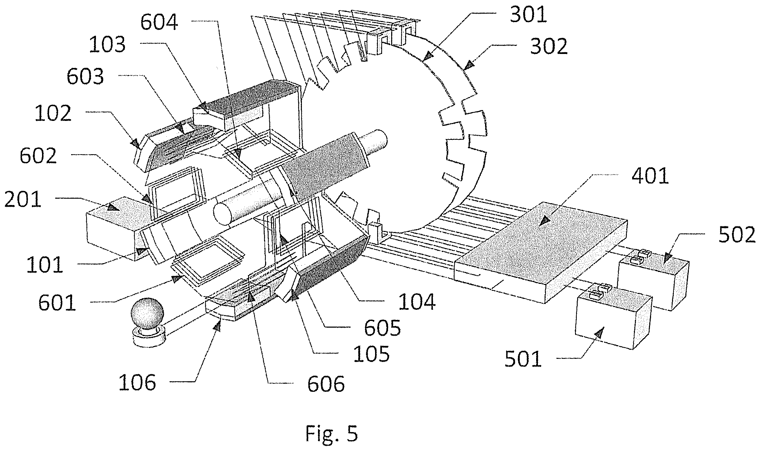

FIG. 5 is a perspective view that illustrates a configuration of an apparatus according to other embodiment of the present invention and coils are placed inside the circumference of the permanent magnets in the apparatus of FIG. 1. Six coils (601, 602, 603, 604, 605, 606) are placed inside the circumference of six permanent magnets (101, 102, 103, 104, 105, 106) and the coils are fixed with unillustrated fixing means. The coils are connected in a way of single-phase power generation. The rotating permanent magnets generate alternate current to coil-1,2,3,4,5,6 (601, 602, 603, 604, 605, 606).

The present invention is not limited to the embodiments of the present invention that are described herein and it should be clear to those who have general knowledge in the technical area related to the present invention that various changes can be made without departing from the scope of the technical thoughts of the present invention.

## Claims

1. An apparatus which rotates a shaft, comprising:
permanent magnets (101, 102, 103, 104, 105, 106) which are placed around a shaft wherein permanent magnets can rotate with the shaft and one pole of each permanent magnet faces the shaft and other pole of each permanent magnet faces outside, and N pole and S pole are alternated;
one electromagnet (201) which is placed outside the circumference of the said permanent magnets;
two secondary cell batteries (501, 502) which supply DC electric current to the said electromagnet;
one rotating component P (301) which is equipped on the shaft and is used to pass and block or to reflect and pass the light of one photointerrupter (photointerrupter-1) repeatedly in order to connect the positive terminal of the said one secondary cell battery (secondary cell battery-1) to one terminal (terminal A) of the said electromagnet and to disconnect them repeatedly,
one rotating component N (302) which is equipped on the shaft and is used to pass and block or to reflect and pass the light of other photointerrupter (photointerrupter-2) repeatedly in order to connect the negative terminal of the secondary cell battery-1 to other terminal (terminal B) of the electromagnet and to disconnect them repeatedly,
the rotating component P (301) is set to pass and block or to reflect and pass the light of other photointerrupter (photointerrupter-3) repeatedly in order to connect the positive terminal of the said other secondary cell battery (secondary cell battery-2) to the terminal B of the electromagnet and to disconnect them repeatedly,
the rotating component N (302) is set to pass and block or to reflect and pass the light of other photointerrupter (photointerrupter-4) repeatedly in order to connect the negative terminal of the secondary cell battery-2 to the terminal A of the electromagnet and to disconnect them repeatedly, wherein the photointerrupters are transmissive type or reflective type;
one device (401) of activating electromagnet which activates the said electromagnet wherein the positive terminal of the secondary cell battery-1 and the terminal A of the electromagnet are connected by one P channel FET (switch P1), the terminal B of the electromagnet and the negative terminal of the secondary cell battery-1 are connected by one N channel FET (switch N1), the positive terminal of the secondary cell battery-2 and the terminal B of the electromagnet are connected by other P channel FET (switch P2), the terminal A of the electromagnet and the negative terminal of the secondary cell battery-2 are connected by other N channel FET (switch N2),
the cathode of one diode (diode-1) is connected to the positive terminal of the secondary cell battery-1 (501) and the anode of the diode-1 is connected to the terminal A of the electromagnet (201),
the cathode of other diode (diode-2) is connected to the terminal B of the electromagnet (201) and the anode of the diode-2 is connected to the negative terminal of the secondary cell battery-1 (501),
the cathode of other diode (diode-3) is connected to the positive terminal of the secondary cell battery-2 (502) and the anode of the diode-3 is connected to the terminal B of the electromagnet (201),
the cathode of other diode (diode-4) is connected to the terminal A of the electromagnet (201) and the anode of the diode-4 is connected to the negative terminal of the secondary cell battery-2 (502),
the switch P1 becomes ON as the light of the photointerrupter-1 is passed by the said rotating component P and the switch P1 becomes OFF as the light of the photointerrupter-1 is blocked by the rotating component P,
the switch N1 becomes ON as the light of the photointerrupter-2 is passed by the said rotating component N and the switch N1 becomes OFF as the light of the photointerrupter-2 is blocked by the rotating component N,
the switch P2 becomes ON as the light of the photointerrupter-3 is passed by the rotating component P and the switch P2 becomes OFF as the light of the photointerrupter-3 is blocked by the rotating component P,
the switch N2 becomes ON as the light of the photointerrupter-4 is passed by the rotating component N and the switch N2 becomes OFF as the light of the photointerrupter-4 is blocked by the rotating component N, wherein the photointerrupters are transmissive type,
the switch P1 and the switch N1 are set to ON to start the electromagnet (201) activating at the position where the electromagnet repels one facing permanent magnet of the said permanent magnets effectively,
routine A:
① both the switch P1 & the switch N1 become ON and so the electromagnet (201) is activated by the secondary cell battery-1 (501),
② then after a while both the switch P1 & the switch N1 become OFF,
③ then after a while the switch P1 becomes ON,
wherein electrons flow from the positive terminal of the secondary cell battery-2 (502) to the terminal B of the electromagnet and also flow from the terminal A of the electromagnet to the negative terminal of the secondary cell battery-2 (502) by back-emf which occurs to the electromagnet (201),
and the above routine A is repeated while the electromagnet repels a facing permanent magnet of the said permanent magnets and attracts a following permanent magnet of the said permanent magnets,
the switch P2 and the switch N2 are set to ON to start the electromagnet (201) activating at the position where the electromagnet repels one facing permanent magnet of the said permanent magnets effectively,
routine B:
① both the switch P2 & the switch N2 become ON and so the electromagnet (201) is activated by the secondary cell battery-2 (502),
② then after a while both the switch P2 & the switch N2 become OFF,
③ then after a while the switch P2 becomes ON,
wherein electrons flow from the positive terminal of the secondary cell battery-1 (501) to the terminal A of the electromagnet and also flow from the terminal B of the electromagnet to the negative terminal of the secondary cell battery-1 (501) by back-emf which occurs to the electromagnet (201),
and the above routine B is repeated while the electromagnet repels a facing permanent magnet of the said permanent magnets and attracts a following permanent magnet of the said permanent magnets.

2. The apparatus of claim 1, comprising coils (601, 602, 603, 604, 605, 606) wherein coils are placed inside the circumference of the said permanent magnets and electricity is generated to coils.
